# FASCICULE DE BREVET EUROPEEN

(11) **EP 1 238 225 B1**
(45) Date de publication et mention de la délivrance du brevet: **10.03.2004**
(21) Numéro de dépôt: 00985416.7
(22) Date de dépôt: 06.12.2000
(51) Int. Cl.: F16L 33/22

(54) **DISPOSITIF DE RACCORDEMENT A BASSE PERMEABILITE**
VERBINDUNGSVORRICHTUNG MIT GERINGER PERMEABILITÄT
LOW-PERMEABILITY CONNECTING DEVICE

(30) Priorité: 13.12.1999 FR 9915656
(43) Date de publication de la demande: 11.09.2002
(73) Titulaire: NOBEL PLASTIQUES, 92000 Nanterre (FR)
(72) Inventeur: MILHAS, Pierre, F-51300 Vitry Le François (FR)
(74) Mandataire: Robert, Jean-Pierre
(86) Numéro de dépôt international: PCT/FR2000/003401
(87) Numéro de publication internationale: WO 2001/044709

(56) Documents cités:
- EP-A- 0 480 818
- DE-C- 4 139 825
- US-A- 5 468 028

## Description

La présente invention concerne un dispositif de raccordement, notamment un raccord rapide pourvu de moyens pour contenir dans des limites acceptables, au regard de normes et réglementations en vigueur ou à venir dans le domaine des véhicules automobiles, l'évasion dans l'atmosphère des produits ou de certains constituants de ceux-ci circulant au travers du raccord.

Dans les moteurs de véhicules automobiles, les fluides (carburant, liquide de refroidissement, liquide de climatisation, liquide d'organes d'assistance hydraulique, de lave-glace...) sont transportés par des canalisations, à partir de pompes et de réservoirs et en retour vers ceux-ci, par des conduits en matière synthétique que l'on raccorde à ces organes fonctionnels au moyen de dispositifs de connexion divers.

Le document US-A-5 468 028 montre un raccord rapide, dans lequel un tube est directement inséré dans le logement annulaire borgne d'un embout.

Aujourd'hui la tendance est de mettre en oeuvre, pour assurer ces connexions, des moyens de raccordement dits "raccords rapides" qui comportent des embouts rigides de forme complémentaire, l'un solidaire du conduit et l'autre solidaire de l'organe fonctionnel, que l'on engage l'un dans l'autre et qui sont maintenus engagés par une sorte de verrou automatique.

Il existe nécessairement des jeux fonctionnels entre ces embouts pour que leur connexion et déconnexion soient aisées et notamment sans l'usage d'outils, jeux qu'il convient d'étancher pour éviter les fuites.

Les organes d'étanchéité mis en oeuvre sont relativement efficaces au regard des liquides transportés, mais ces liquides contiennent de multiples composants dont certains sont très volatiles et se jouent de l'étanchéité mise en place. Le circuit de fluide est donc à cet endroit plus perméable qu'ailleurs et c'est dans ces zones de raccordement qu'on constate un fort taux d'émission en direction de l'atmosphère, émission qui rend inapte l'ensemble du circuit à satisfaire les normes ou les préconisations prescrites.

Par la présente invention, on entend remédier à cet inconvénient en équipant les dispositifs de raccordement de moyens pour maîtriser les émissions de produits polluants (notamment les hydrocarbures) à leur niveau.

A cet effet donc l'invention a pour objet un dispositif de raccordement à basse perméabilité d'un premier embout prolongeant un tube à un second embout porté par la paroi d'un organe auquel le tube est relié dans lequel le second embout est à deux parois concentriques définissant entre elles un logement annulaire borgne d'accueil du premier embout tandis qu'un élément d'étanchéité s'étend entre la face interne de la paroi la plus extérieure du second embout tandis que la surface interne du premier embout est en contact avec la face externe de la paroi la plus intérieure du second embout lorsque ce premier embout est placé dans le logement susdit.

Bien entendu on suppose que la paroi interne du second embout coopère de manière relativement étanche avec la face interne de la paroi du premier embout comme dans tout raccord par l'intermédiaire ou non d'un joint d'étanchéité. La disposition selon l'invention est telle que le logement qui reçoit, entre les deux parois du second embout, le premier embout constitue une chambre de confinement des émissions de produits traversant la première étanchéité. Dans cette chambre les produits tendant à s'évader sont sous forme de vapeur et peuvent se condenser. Leur pression est nettement inférieure à la pression qui règne dans le conduit traversant les deux embouts si bien que la tendance de ces produits à s'échapper vers l'extérieur est beaucoup moins importante qu'au niveau de la première étanchéité. Cette tendance peut alors être contrariée par des joints beaucoup plus efficaces que ceux qui sont mis en oeuvre dans les coupleurs ou dispositifs de raccordement connus.

Dans un mode préféré de réalisation, on peut prévoir l'extrémité borgne du logement annulaire située complètement d'un côté de la paroi de l'organe qui porte le second embout et de préférence du côté de sa face interne, de sorte que si la paroi de ce logement est perméable (parce qu'en matière synthétique et que toute matière synthétique est perméable aux hydrocarbures ou aux produits alcoolisés contenus dans les fluides automobiles) les produits traversant cette paroi rejoindront l'espace intérieur de l'organe fonctionnel, que celui-ci soit un réservoir de carburant, une pompe de carburant... On réalise ainsi une sorte de recyclage des produits qui, habituellement, tendaient à s'échapper dans l'atmosphère.

D'autres caractéristiques et avantages de l'invention ressortiront de la description donnée ci-après à titre d'exemple et en référence aux dessins annexés parmi lesquels :
- la figure 1 est un schéma d'une réalisation de principe de l'invention vue en coupe longitudinale,
- la figure 2 est une vue éclatée d'un mode de réalisation du dispositif de raccordement selon l'invention,
- la figure 3 est une vue en perspective et partiellement en coupe du dispositif selon l'invention à l'état raccordé.

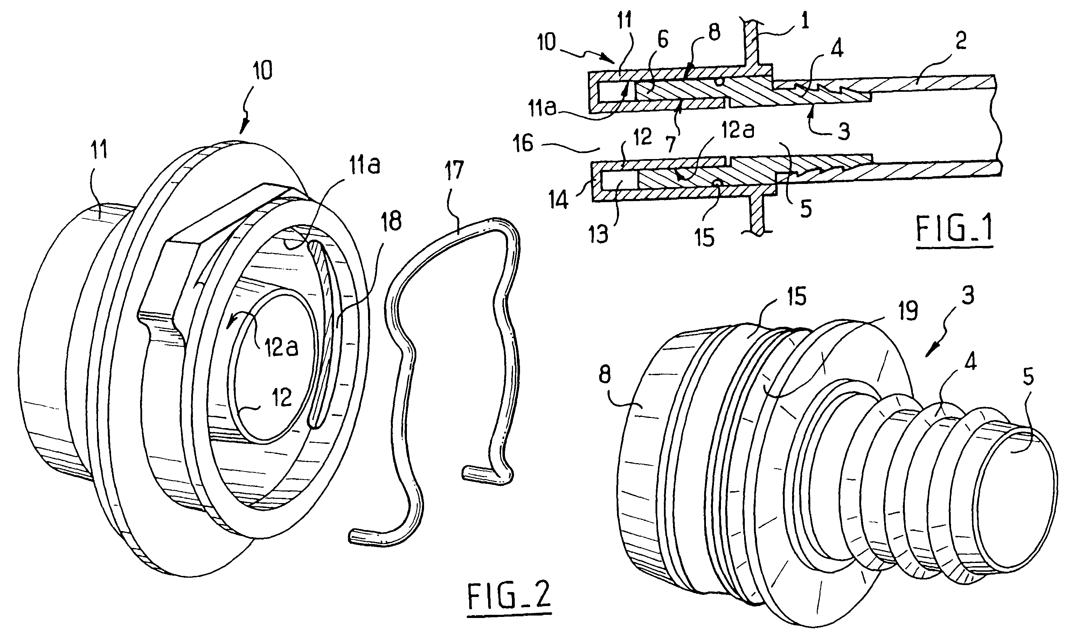

A la figure 1 on a représenté en 1 la paroi d'un organe fonctionnel qui peut être par exemple un réservoir, une pompe,... auquel doit être raccordé un tube 2. Ce tube 2 est prolongé par un embout 3 rigide auquel il est fermement associé par tout dispositif connu tel que, comme représenté, un emmanchement à force sur une queue de sapin 4.

Cet embout 3, qui bien entendu comporte un passage intérieur axial 5, se termine à l'opposé de la queue de sapin 4 par une paroi annulaire 6 délimitée par une surface interne 7 et une surface externe 8. Les surfaces 7 et 8 sont ici représentées coaxiales au passage central 5 de l'embout mais cet embout peut être un embout coudé et ses surfaces être orientées différemment par rapport à ce passage.

La paroi 1 de l'organe fonctionnel comporte également un embout 10, lequel comporte deux parois concentriques 11, 12 définissant entre elles un logement 13 borgne d'accueil de la partie 6 de l'embout 3, ce logement étant donc fermé par une paroi de fond 14. La paroi interne 12 de l'embout 10 possède une face externe 12a ; la paroi extérieure 11 de l'embout 10 possède une face interne 11a. Entre la face externe 8 de l'embout 3 et la face interne 11a de la paroi 11 de l'embout 10, on a mis en place un dispositif d'étanchéité 15 dont une forme de réalisation particulière sera décrite en regard des figures suivantes. La coopération de la surface extérieure 12a de la paroi interne 12 et de la surface intérieure 7 de la partie 6 de l'embout 3 est une coopération étanche avec ou sans joint. Dans le cas où le raccord ne serait pas un raccord, à connexion instantanée par simple rapprochement des deux embouts, la coopération entre les surfaces 12a et 7 peut par exemple être réalisée au moyen d'un filetage et d'un taraudage avec un joint d'étanchéité disposé entre les deux pièces. Dans le cas d'un raccord rapide, cette coopération se fera par l'intermédiaire d'un autre joint d'étanchéité dont on verra un mode de réalisation aux figures suivantes.

L'embout 10, comme l'embout 3, possède un passage interne 16 du fluide qui circule du tube 2 vers l'organe fonctionnel ou dans la direction inverse. Le point de plus grande perméabilité du circuit hydraulique concerné par ce raccordement est bien entendu l'espace qui existe entre les surfaces 12a et 7. On comprend qu'avec l'invention cet espace débouche dans le logement borgne 13 qui constitue une chambre de confinement et d'accumulation du produit ayant pu franchir l'étanchéité entre les deux surfaces 12a et 7. Dans cet espace de confinement, le produit est à pression moins élevée que dans la canalisation qui le véhicule, si bien que le système d'étanchéité 15 est beaucoup plus efficace qu'un même système disposé entre les surfaces 7 et 12a. Le produit peut donc stagner dans ce logement 13 et si la paroi 11, 12, 14 du logement 13 est perméable, il peut s'écouler au travers de cette paroi. C'est pour cela qu'il est intéressant de prévoir que l'embout 10 soit ménagé du côté de la paroi 1 de l'organe fonctionnel interne à cet organe qu'il s'agisse d'un réservoir ou d'une pompe par exemple, de manière que le produit qui quitte le logement borgne 13 au travers de sa paroi retourne dans l'organe fonctionnel plutôt que de rejoindre l'atmosphère.

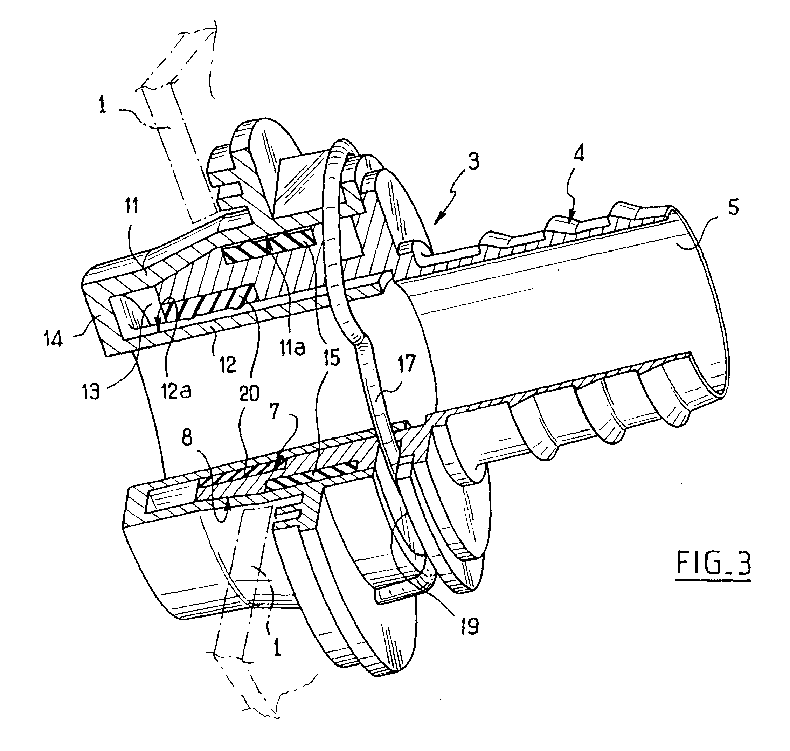

Aux figures 2 et 3, le mode de réalisation représenté concerne un dispositif de raccordement du genre raccord rapide. Les éléments de ce dispositif déjà décrits au regard de la figure 1 portent les mêmes références.

L'embout 10 est représenté ici sous la forme d'une pièce séparée de l'organe fonctionnel qu'il doit équiper, pièce séparée qui peut être rapportée à cet organe fonctionnel (à une paroi 1 de celui-ci indiquée schématiquement en trait mixte à la figure 3) par tout moyen connu comme le soudage soit par ultrasons, par vibrations, par rotation ou le collage.... L'embout 10 possède donc une partie située d'un coté de cette paroi 1 qui forme essentiellement le logement borgne 13 donc à l'intérieur de l'organe fonctionnel tandis qu'une partie opposée à ce logement 13 fait saillie à l'extérieur de la paroi 1 et porte de manière connue une agrafe élastique 17 dont les branches pénètrent à l'intérieur de lumières 18 de l'embout 10 pour constituer des verrous élastiques à l'embout 3 lorsqu'il est emmanché dans cet embout 10. En effet, les branches de l'agrafe 17, sont d'abord écartées par la partie conique de la surface 8 de l'embout 3 au passage de celles-ci au droit des lumières 18 puis, après le joint 15, ces branches retombent élastiquement à l'intérieur d'une gorge 19 prévue dans l'embout 3.

On remarque à ces figures 2 et 3 que le dispositif d'étanchéité 15 est constitué par une matière élastomérique logée dans une gorge extérieure de la surface 8 de l'embout 3. De la même manière, il existe un dispositif d'étanchéité 20 formé par une matière élastomérique logée dans une gorge ménagée dans la surface interne 7 de cet embout 3. De manière préférée, l'embout 3 est réalisé par injection bi-matière de sorte que les joints 15 et 20 sont formés en une seule pièce avec l'embout 3.

## Revendications

1. Dispositif de raccordement à basse perméabilité d'un premier embout (3) prolongeant un tube (2) à un second embout (10) porté par la paroi (1) d'un organe auquel le tube (2) est relié, dans lequel le second embout (10) est à deux parois sensiblement concentriques (11, 12) définissant entre elles un logement (13) annulaire borgne d'accueil du premier embout (3), et un élément d'étanchéité (15) s'étend entre la face interne (11a) de la paroi la plus extérieure (11) du second embout et la surface externe (8) du premier embout, tandis que la surface interne (7) du premier embout est en contact avec la face externe (12a) de la paroi la plus intérieure (12) du second embout lorsque ce premier embout est placé dans le logement (13) susdit.

2. Dispositif selon la revendication 1, **caractérisé en ce que** le premier embout (3) délimite dans le logement (13) du second embout (10) un espace libre de confinement des fuites se produisant entre la paroi interne du logement et le premier embout.

3. Dispositif selon l'une des revendications 1 et 2, **caractérisé en ce qu'**un élément d'étanchéité (20) est disposé entre la face interne (7) du premier embout (3) et la face externe (12a) de la paroi (12) la plus intérieure du second embout.

4. Dispositif selon l'une des revendications précédentes, **caractérisé en ce que** l'extrémité borgne du logement (13) annulaire est en saillie de la face interne de la paroi (1) de l'organe qui porte le second embout (10).

5. Dispositif selon l'une des revendications précédentes, **caractérisé en ce qu'**il comprend des moyens (17, 18, 19) assurant le maintien démontable de la connexion des premier et second embouts.

6. Dispositif selon l'une des revendications précédentes, **caractérisé en ce que** le second embout (10) est un élément rapporté sur la paroi (1) de l'organe par tout moyen de liaison connu.

7. Dispositif selon l'une des revendications 3 à 6, **caractérisé en ce que** le premier embout comporte au moins un joint d'étanchéité (20) tourné vers la paroi intérieure (12) du second embout et au moins un joint d'étanchéité (15) tourné vers la paroi extérieure (11) du second embout, le premier embout (3) et les joints (15) étant en une seule pièce obtenus par un procédé d'injection bi-matière.

## Patentansprüche

1. Verbindungsvorrichtung mit geringer Permeabilität zum Verbinden eines ersten Ansatzstückes (3), das ein Rohr (2) verlängert, mit einem zweiten Ansatzstück (10), das von der Wand (1) eines Teiles getragen wird, mit dem das Rohr (2) verbunden wird, wobei das zweite Ansatzstück (10) aus zwei im wesentlichen konzentrischen (11, 12) Wänden besteht, die zwischen sich eine einseitig geschlossene ringförmige Aufnahme (13) zur Aufnahme des ersten Ansatzstückes (3) begrenzen, und wobei sich ein Dichtungselement (15) zwischen der Innenfläche (11a) der äußersten Wand (11) des zweiten Ansatzstückes und der Außenfläche (8) des ersten Ansatzstückes erstreckt, während die Innenfläche (7) des ersten Ansatzstückes mit der Außenfläche (12a) der innersten Wand (12) des zweiten Ansatzstückes in Kontakt steht, wenn dieses erste Ansatzstück in der oben genannten Aufnahme (13) angeordnet ist.

2. Vorrichtung nach Anspruch 1, **dadurch gekennzeichnet, daß** das erste Ansatzstück (3) in der Aufnahme (13) des zweiten Ansatzstückes (10) einen freien Raum zum Einschluß von Leckflüssigkeiten begrenzt, die zwischen der Innenwand der Aufnahme und dem ersten Ansatz auftreten.

3. Vorrichtung nach einem der Ansprüche 1 und 2, **dadurch gekennzeichnet, daß** zwischen der Innenfläche (7) des ersten Ansatzstückes (3) und der Außenfläche (12a) der innersten Wand (12) des zweiten Ansatzstückes ein Dichtungselement (20) angeordnet ist.

4. Vorrichtung nach einem der vorhergehenden Ansprüche, **dadurch gekennzeichnet, daß** das geschlossene Ende der ringförmigen Aufnahme (13) von der Innenfläche der Wand (1) des Teils vorsteht, das das zweite Ansatzstück (10) trägt.

5. Vorrichtung nach einem der vorhergehenden Ansprüche, **dadurch gekennzeichnet, daß** sie Mittel (17, 18, 19) umfaßt, die das demontierbare Halten der Verbindung zwischen dem ersten und dem zweiten Ansatzstück sicherstellen.

6. Vorrichtung nach einem der vorhergehenden Ansprüche, **dadurch gekennzeichnet, daß** das zweite Ansatzstück (10) ein Element ist, das an der Wand (1) des Teiles durch irgendwelche bekannte Verbindungsmittel angefügt ist.

7. Vorrichtung nach einem der Ansprüche 3 bis 6, **dadurch gekennzeichnet, daß** das erste Ansatzstück mindestens eine Dichtung (20) umfaßt, die zur Innenwand (12) des zweiten Ansatzstückes gerichtet ist, sowie mindestens eine Dichtung (15), die zur Außenwand (11) des zweiten Ansatzstückes gerichtet ist, wobei das erste Ansatzstück (3) und die Dichtungen (15) einstückig in einem Einspritzvorgang mit zwei Materialien ausgebildet wurden.

## Claims

1. A low permeability coupling device for coupling a first endpiece (3) extending a tube (2) with a second endpiece (10) carried by the wall (1) of a member to which the tube (2) is connected, the coupling device being wherein the second endpiece (10) has two substantially coaxial walls (11, 12) defining between them a blind annular housing (13) for receiving the first endpiece (3), and a sealing element (15) extends between the inside face (11a) of the outer wall (11) of the second endpiece and the outside surface (8) of the first endpiece, while the inside surface (7) of the first endpiece is in contact with the outside face (12a) of the inner wall (12) of the second endpiece when said first endpiece is placed in the above-mentioned housing (13).

2. A device according to claim 1, **characterized in that** the first endpiece (3) co-operates with the housing (3) of the second endpiece (10) to define an empty space for confining leaks that occur between the inside wall of the housing and the first endpiece.

3. A device according to claim 1 or claim 2, **characterized in that** a sealing element (20) is placed between the inside face (7) of the first endpiece (3) and the outside face (12a) of the inner wall (12) of the second endpiece.

4. A device according to any preceding claim, **characterized in that** the blind end of the annular housing (13) projects from the inside face of the wall (1) of the member which carries the second endpiece (10).

5. A device according to any preceding claim, **characterized in that** it includes means (17, 18, 19) for releasably securing the connection between the first and second endpieces.

6. A device according to any preceding claim, **characterized in that** the second endpiece (10) is an element fitted to the wall (1) of the member by any conventional connection means.

7. A device according to any one of claims 3 to 6, **characterized in that** the first endpiece has at least one sealing gasket (20) facing towards the inside wall (12) of the second endpiece and at least one sealing gasket (15) facing towards the outside wall (1) of the second endpiece, the first endpiece (3) and the gaskets (15) being formed as a single piece obtained by a two-material injection method.
